# EUROPÄISCHE PATENTSCHRIFT

(11) **EP 0 680 573 B1**
(45) Veröffentlichungstag und Bekanntmachung des Hinweises auf die Patenterteilung: **27.12.1996**
(21) Anmeldenummer: 93903823.8
(22) Anmeldetag: 18.02.1993
(51) Int. Cl.: F16J 1/08, F16J 1/16

(54) **HUBKOLBEN EINES VERBRENNUNGSMOTORS**
RECIPROCATING PISTON FOR AN INTERNAL-COMBUSTION ENGINE
PISTON ALTERNATIF D'UN MOTEUR A COMBUSTION INTERNE

(30) Priorität: 27.03.1992 DE 4210056
(43) Veröffentlichungstag der Anmeldung: 08.11.1995
(73) Patentinhaber: MAHLE GMBH, D-70376 Stuttgart (DE)
(72) Erfinder: LINGENHÖLIN, Dieter, D-7000 Stuttgart 50 (DE)
(74) Vertreter: Pfusch, Volker, Dipl.-Ing.
(86) Internationale Anmeldenummer: DE9300160
(87) Internationale Veröffentlichungsnummer: WO9320369

(56) Entgegenhaltungen:
- DE-A- 3 838 288
- DE-B- 1 014 387
- US-A- 2 990 226
- US-A- 4 984 544

## Beschreibung

Die Erfindung betrifft einen Hubkolben eines Verbrennungsmotors nach dem Oberbegriff des Patentanspruchs 1.

Ein solcher Kolben ist aus DE-B-1 014 387 bekannt.

Hiervon ausgehend beschäftigt sich die Erfindung mit dem Problem, die Schmierung der Nabenbohrungen zu vereinfachen und mit Bezug auf den gesamten Nabenbohrungsumfang zu verbessern.

Eine solche Verbesserung soll insbesondere bei einem Kolben mit einer gestuften Nabe nach DE-A-38 38 288 erreicht werden.

Eine Lösung zeigt eine Ausführung des gattungsgemäßen Kolbens nach den kennzeichnenden Merkmalen des Patentanspruchs 1 auf.

Eine zweckmäßige Ausgestaltung ist Gegenstand des Unteranspruchs 2.

Eine gattungsähnliche Nabenbohrungsschmierung ist aus dem Stand der Technik auch noch aus US-A-4,984,544 bekannt. Im Gegensatz zu dem aus DE-B-1 014 387 vorbekannten Kolben besitzt jener jedoch keinen über die Höhe variierenden Nabenabstand, so daß dieser mit Bezug auf das erfindungsgemäß vorliegende Problem nicht relevant ist.

Ein Ausführungsbeispiel ist in der Zeichnung dargestellt.

Es zeigen:

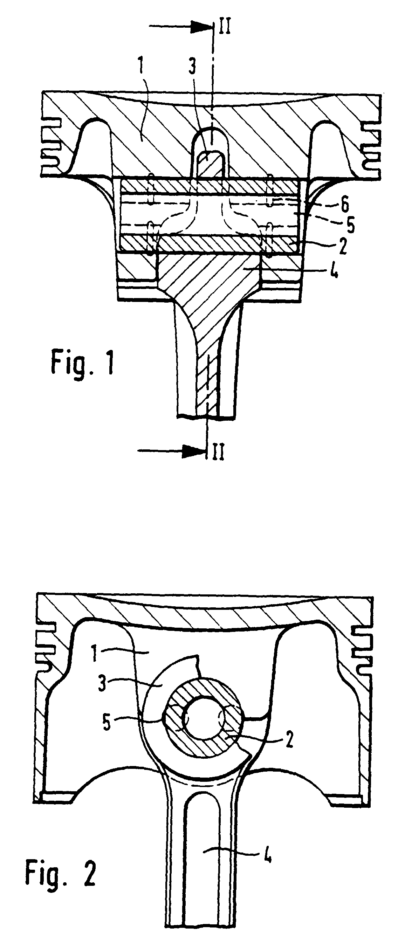

- Fig. 1: eine Kolben-Pleuel-Verbindung im Längsschnitt durch die Achse des Kolbenbolzens
- Fig. 2: Die Kolben-Pleuel-Verbindung im Schnitt nach Linie II - II in Fig. 1

An dem in den Naben 1 des Kolbens gelagerten Kolbenbolzen 2 greift ein ringförmiger Abschnitt 3 des Pleuels 4 an.

Die erfindungsgemäßen Schmiernuten 5 sind in den Nabenbohrungen jeweils so angeordnet, daß sie in dem oberen innen liegenden Nabenbereich, in dem die Naben radial enger als in dem unteren Bereich aneinander liegen, gegenüber dem Kolbenbolzen 2 jeweils einen zum Kurbelraum hin offenen Spalt ausbilden. Durch diese Spalte kann verstärkt Schmieröl in die Nabenbohrungen eintreten. Innerhalb der Nabenbohrungen können noch zusätzlich in Umfangsrichtung verlaufende Schmierrillen 6 vorgesehen sein, die mit den Schmiernuten 5 verbunden sind und von dort aus mit Schmieröl versorgbar sind.

## Patentansprüche

1. Hubkolben eines Verbrennungsmotors mit Naben (1) zur Aufnahme eines Kolbenbolzens (2), bei dem in einem sich zum Kolbenboden erstreckenden Bereich ein geringerer gegenseitiger Nabenabstand vorliegt als in einem zum Kolbenschaftende hin gerichteten Bereich, und bei dem in den Nabenbohrungen parallel zur Nabenbohrungsachse verlaufende radial mit einer Schmierölzufuhr versehene Schmiernuten (5) angeordnet sind,
**dadurch gekennzeichnet,**
daß in jeder der beiden Nabenbohrungen jeweils zwei gegenüberliegende Schmiernuten (5) angeordnet sind, die zur Kolbenachse in einem Bereich liegen, in dem die Bereiche unterschiedlichen Nabenabstandes über eine Stufe aneinander grenzen und daß die Schmiernuten (5) in diesem Bereich zum Kurbelraum hin offen sind und ferner innerhalb der Nabenbohrungen durch eine Umfangs-Schmierrille (6) miteinander verbunden sind.

2. Hubkolben nach Anspruch 1
**dadurch gekennzeichnet,**
daß die Schmiernuten (5) in bezug auf die Kolbenlängsachse etwa auf der Höhe der Nabenbohrungsachse liegen.

## Claims

1. Reciprocating piston for an internal-combustion engine with bosses (1) which are designed to hold a gudgeon pin (2), in which in a zone extending towards the piston crown there is a smaller distance between bosses than in a zone facing the piston shaft end, and in which in the boss bores lubrication grooves (5) are arranged running parallel to the boss bore axis and provided radially with a supply of lubrication oil,
characterised in that
in each of the two boss bores two opposite lubrication grooves (5) are arranged respectively, which are positioned in a zone relative to the piston axis in which the zones with different distances between bosses are stepped, and in that the lubrication grooves (5) in this region face towards the crankcase space and are also connected together inside the boss bores by a peripheral lubrication channel (6).

2. Reciprocating piston according to claim 1,
characterised in that
the lubrication grooves (5) are positioned approximately at the level of the boss bore axis with respect to the longitudinal axis of the gudgeon.

## Revendications

1. Piston alternatif d'un moteur à combustion interne comportant des moyeux (1) pour la réception d'un axe de piston (2), dans lequel un écartement mutuel des moyeux plus petit existe dans une région s'étendant vers le fond du piston que dans une région tournée vers l'extrémité de la tige de piston, et dans lequel des gorges de lubrification (5) sont disposées dans les perçages des moyeux, s'étendant parallèlement à l'axe des perçages des moyeux, pourvues radialement d'une adduction d'huile lubrifiante, caractérisé en ce que dans chacun des deux perçages des moyeux deux gorges de lubrification (5) sont disposées face à face, lesdites gorges étant situées par rapport à l'axe du piston dans une région dans laquelle les régions de différent écartement des moyeux confinent l'une à l'autre par l'intermédiaire d'un échelon, et en ce que les gorges de lubrification (5) sont ouvertes vers le carter dans cette région, et, de plus, reliées entre elles dans les perçages des moyeux par un sillon de lubrification périphérique (6).

2. Piston alternatif selon la revendication 1, caractérisé en ce que les gorges de lubrification (5) sont à peu près à la hauteur de l'axe des perçages des moyeux par rapport à l'axe longitudinal du piston.
